Europäisches Patentamt

European Patent Office

Office européen des brevets

(19)

(11) Veröffentlichungsnummer : **0 244 503**
**B1**

(12) **EUROPÄISCHE PATENTSCHRIFT**

(45) Veröffentlichungstag der Patentschrift :
17.05.89

(51) Int. Cl.⁴ : **A 47 J 27/00, A 47 G 19/00**

(21) Anmeldenummer : 86108807.8

(22) Anmeldetag : 27.06.86

(54) **Mikrowellenfestes Geschirrteil.**

(30) Priorität : 06.05.86 DE 3615272

(43) Veröffentlichungstag der Anmeldung :
11.11.87 Patentblatt 87/46

(45) Bekanntmachung des Hinweises auf die Patenterteilung : 17.05.89 Patentblatt 89/20

(84) Benannte Vertragsstaaten :
DE FR GB IT NL

(56) Entgegenhaltungen :
DE–A– 2 810 440
FR–A– 2 451 182

(73) Patentinhaber : W.C. Heraeus GmbH
Heraeusstrasse 12 - 14
D-6450 Hanau / Main (DE)

(72) Erfinder : Wild, Wolfgang
Burgallee 29
D-6450 Hanau (DE)
Erfinder : Strauss, Joachim
Friedrichstrasse 14
D-6450 Hanau (DE)
Erfinder : Landgraf, Günter, Dr.
Helmholtzstrasse 17
D-6450 Hanau (DE)

(74) Vertreter : Heinen, Gerhard, Dr.
W.C. Heraeus GmbH Zentralbereich Patente und Lizenzen Heraeusstrasse 12-14
D-6450 Hanau (DE)

Jouve, 18, rue St-Denis, 75001 Paris, France

**Beschreibung**

Die Erfindung bezieht sich auf ein mikrowellenfestes Geschirrteil aus silikatischem Werkstoff, wie Porzellan, Glas, Steingut oder Keramik. Ein derartiges Geschirrteil ist- aus der DE-A-2810440 bekannt. Unter Geschirrteil sollen vorzugsweise Teller, Tassen, Schüsseln, Schalen, Becher und Trinkgläser verstanden werden.

Sowohl in den Betriebsanleitungen der Hersteller von Mikrowellen-Geräten, die zur Wärmebehandlung von Nahrungsmitteln verwendet werden, als auch in der Fachliteratur wird davor gewarnt, mit Metall-Dekoren, wie Goldränder oder dergleichen, versehene Geschirrteile zum Erwärmen von Nahrungsmitteln in das Mikrowellen-Gerät einzubringen, weil der Dekor unter der Einwirkung des Mikrowellenfeldes, beispielsweise durch Spannungsüberschläge, zerstört wird.

Es ist daher Aufgabe der vorliegenden Erfindung, ein mit einem Edelmetall-Dekor versehenes Geschirrteil aus silikatischem Werkstoff zu schaffen, das zur Wärmebehandlung von Nahrungsmitteln in ein Mikrowellen-Gerät eingebracht werden kann, ohne daß der Edelmetall-Dekor zerstört wird.

Gelöst wird diese Aufgabe für ein mikrowellenfestes Geschirrteil der eingangs charakterisierten Art erfindungsgemäß dadurch, daß es einen Edelmetall-Dekor aufweist, der aus mehreren Rasterelementen besteht, wobei der Abstand zweier benachbarter Rasterelemente mindestens 0,2 mm und die maximale Ausdehnung eines Rasterelements 5 mm betragen. Vorteilhafterweise liegt die Ausdehnung eines Rasterelements im Bereich von 0,3 bis 4 mm. Der Edelmetall-Dekor besteht vorzugsweise aus Rasterelementen, die im wesentlichen in Form und/oder Größe gleich sind. Die Form der Rasterelemente kann im Prinzip beliebig sein, beispielsweise quadratisch, rechteckig, kreisförmig oder elliptisch.

Überraschenderweise hat sich gezeigt, daß Geschirrteile, die mit einem erfindungsgemäß ausgebildeten Edelmetall-Dekor versehen sind, beliebig lange Zeiten — mindestens jedoch solange wie die Wärmebehandlung eines auf oder in dem Geschirrteil befindlichen Nahrungsmittels in einem Mikrowellen-Gerät dauert — in dem Mikrowellenfeld verbleiben können, ohne daß der Edelmetall-Dekor zerstört wird.

Besonders bewährt haben sich Edelmetall-Dekore, die aus Rasterelementen mit abgerundeten Randbereichen bestehen, insbesondere solche Rasterelemente in Form einer Kreisscheibe oder Ellipsenscheibe. Durch den Wegfall spitzer Ecken ist die Gefahr eines Spannungsüberschlages und damit die Zerstörung des Dekors noch erheblich vermindert.

Der optische Eindruck des erfindungsgemäß ausgebildeten Edelmetall-Dekors ist besonders gut, d. h. der Dekor wirkt gegenüber dem menschlichen Auge praktisch wie ein « ungerasterter » Dekor, wenn die Summe der Flächen der Rasterelemente etwa 60 % der Gesamtfläche des Dekors beträgt.

Die Schichtdicke eines Rasterelements liegt vorzugsweise in einem Bereich von 0,0001 bis 0,1 mm, vorzugsweise im Bereich von 0,0001 bis 0,001 mm.

Zur Herstellung des Dekors können beliebige handelsübliche Edelmetall-Präparate verwendet werden ; bewährt haben sich insbesondere Gold-, Platin- und Palladium-haltige Präparate, wie Glanzgold-, Poliergold-, Pudergold-, Glanzplatin-, Polierplatin-, Puderplatin- oder Glanzpalladium-Präparate, die auf dem zu dekorierenden Geschirrteil eingebrannt werden. Das Edelmetall-Präparat kann in der in der Dekorationstechnik von Geschirrteilen üblichen bekannten Weise aufgebracht werden, beispielsweise mittels Pinsel, Feder, im Siedruckverfahren als Direktdruck oder auf dem weg über ein Abziehbild, durch Aufstempeln oder im Offsetdruckverfahren.

In den Figuren sind Ausführungsbeispiele der Erfindung dargestellt. Es zeigen :

Figur 1 eine Aufsicht auf ein Geschirrteil, das mit einem erfindungsgemäß ausgebildeten Gold-Dekor versehen ist,

Figur 2 einen Ausschnitt des Gold-Dekors gemäß Figur 1 im vergrößerten Maßstab,

Figur 3 Beispiele von Rasterelement-Formen.

Das Geschirrteil 1, ein Teller, ist mit einem Gold-Dekor 2 versehen. Der Teller besteht aus Porzellan. Der Dekor 2 wurde im Siebdruckverfahren auf den Teller 1 aufgebracht und bei 830 °C eingebrannt. Wie ersichtlich, wirkt der Dekor optisch einheitlich. Dies wird dadurch erreicht, daß die Summe der Flächen der einzelnen Rasterelemente 60 % der Gesamtfläche des Dekors beträgt. Der dekorierte Teller wurde in ein handelsübliches Mikrowellen-Gerät eingebracht und dem Mikrowellenfeld wiederholt 15 Minuten lang ausgesetzt, ohne daß eine Zerstörung des Dekors beobachtet werden konnte. Der gleiche Versuch wurde mit auf dem dekorierten Teller aufgelegter Fleischscheibe wiederholt ; auch in diesem Falle konnte keine Dekor-Zerstörung oder -Beschädigung beobachtet werden.

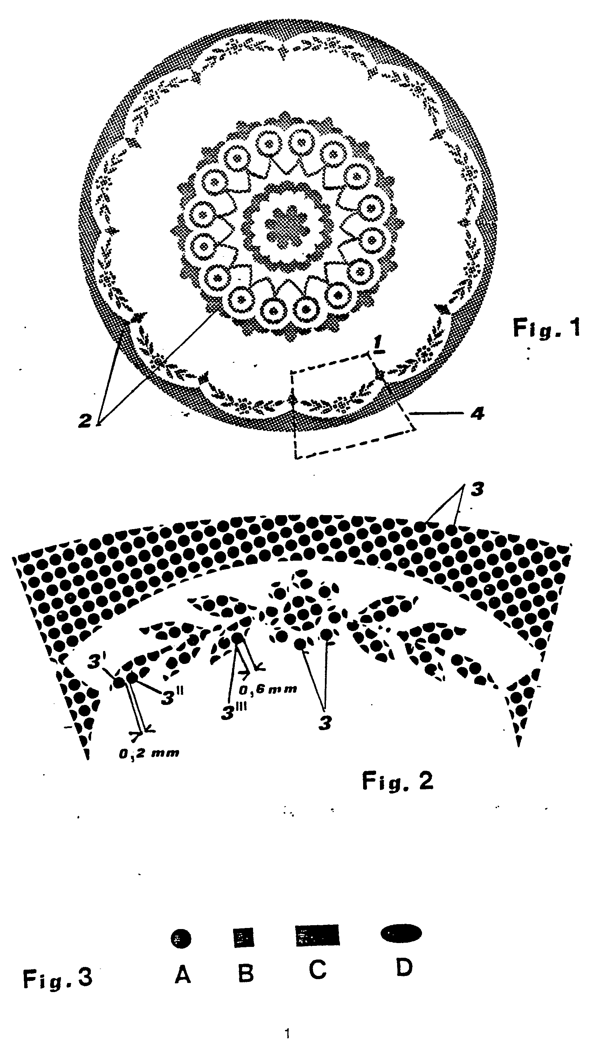

Wie aus dem in Figur 2 dargestellten vergrößerten Dekor-Ausschnitt — in Figur 1 durch den gestrichelten Rahmen 4 angedeutet — hervorgeht, besteht der Gold-Dekor 2 aus einer Vielzahl von einzelnen Rasterelementen 3, die im Ausführungsbeispiel Kreisscheiben sind. Der Abstand zwischen zwei benachbarten Rasterelementen 3', 3" beträgt im vorliegenden Fall 0,2 mm. Die maximale Ausdehnung eines Rasterelementes 3'" entspricht dem Durchmesser der Kreisscheibe, er beträgt 0,6 mm. Wie aus der Figur 2 ersichtlich, besteht der Gold-Dekor 2 aus Rasterelementen von im wesentlichen gleicher Form und gleicher Größe.

Figur 3 zeigt vier verschiedene, bevorzugte Formen von Rasterelementen 3, und zwar in

Figur 3A ein Rasterelement in Form einer Kreisscheibe

Figur 3B ein Rasterelement in Form eines Quadrats

Figur 3C ein Rasterelement in Form eines Rechtecks und in Figur 3D ein Rasterelement in Form eimer elliptischen Scheibe.

**Patentansprüche**

1. Mikrowellenfestes Geschirrteil aus silikatischem Werkstoff, wie Porzellan, Glas, Steingut oder Keramik, dadurch gekennzeichnet, daß es einen Edelmetall-Dekor aufweist, der aus mehreren Rasterelementen besteht, wobei der Abstand zweier benachbarter Rasterelemente mindestens 0,2 mm und die maximale Ausdehnung eines Rasterelements 5 mm betragen.

2. Geschirrteil nach Anspruch 1, dadurch gekennzeichnet, daß die Ausdehnung eines Rasterelements im Bereich von 0,3 bis 4 mm liegt.

3. Geschirrteil nach den Ansprüchen 1 oder 2, dadurch gekennzeichnet, daß der Edelmetall-Dekor im wesentlichen aus in Form und/oder Größe gleichen Rasterelementen besteht.

4. Geschirrteil nach den Ansprüchen 1 bis 3, dadurch gekennzeichnet, daß die Rasterelemente abgerundete Randbereiche aufweisen.

5. Geschirrteil nach Anspruch 4, dadurch gekennzeichnet, daß die Rasterelemente in Form einer Kreisscheibe oder Ellipsenscheibe ausgebildet sind.

6. Geschirrteil nach einem der Ansprüche 1 bis 5, dadurch gekennzeichnet, daß soviele Rasterelemente vorgesehen sind, daß die Summe der Flächen der Rasterelemente bis etwa 60 % der Gesamtfläche des Dekors beträgt.

7. Geschirrteil nach einem der Ansprüche 1 bis 6, dadurch gekennzeichnet, daß der Edelmetall-Dekor aus einer eingebrannten Gold-, Platin oder Palladiumhaltigen Schicht besteht.

8. Geschirrteil nach Anspruch 7, dadurch gekennzeichnet, daß die Schichtdicke eines Rasterelements 0,0001 bis 0,1 mm beträgt.

9. Geschirrteil nach Anspruch 8, dadurch gekennzeichnet, daß die Schichtdicke des Rasterelements 0,0001 bis 0,001 mm beträgt.

**Claims**

1. Microwave-proof crockery piece of siliceous material such as china, glass, earthenware or ceramics, characterised in that it has a precious metal decoration which comprises several screen elements, wherein the spacing between two adjacent screen elements amounts to at least 0.2 mm ; and the maximum extension of a screen element amounts to 5 mm.

2. Crockery piece according to claim 1, characterised in that the extension of a screen element lies within the range from 0.3 to 4 mm.

3. Crockery piece according to claim 1 or 2, characterised in that the precious metal decoration essentially comprises screen elements identical in shape and/or size.

4. Crockery piece according to claims 1 to 3, characterised in that the screen elements have rounded off marginal areas.

5. Crockery piece according to claim 4, characterised in that the screen elements are produced in the form of a circular or elliptical disc.

6. Crockery piece according to one of the claims 1 to 5, characterised in that so many screen elements are provided that the sum of the areas of the screen elements amounts to approximately 60 % of the total surface of the decoration.

7. Crockery piece according to one of the claims 1 to 6, characterised in that the precious metal decoration consists of a fired-on layer containing gold, platinum or palladium.

8. Crockery piece according to claim 7, characterised in that the layer thickness of a screen element amounts to 0.0001 to 0.1 mm.

9. Crockery piece according to claim 8, characterised in that the layer thickness of the screen element amounts to 0.0001 to 0.001 mm.

**Revendications**

1. Pièce de vaisselle résistante aux micro-ondes, faite d'un matériau à base de silicate(s), tel que porcelaine, verre, faïence ou céramique, caractérisée en ce qu'elle présente un décor en métal noble, qui est composé d'éléments ponctuels qui sont mutuellement espacés d'au moins 0,2 mm et dont la dimension maximale est de 5 mm.

2. Pièce selon la revendication 1, caractérisée en ce que la dimension d'un élément ponctuel est comprise entre 0,3 et 4 mm.

3. Pièce selon la revendication 1 ou 2, caractérisée en ce que le décor en métal noble est composé essentiellement d'éléments ponctuels de même forme et/ou de même grandeur.

4. Pièce selon l'une quelconque des revendications 1 à 3, caractérisée en ce que les éléments ponctuels possèdent des bords arrondis.

5. Pièce selon la revendication 4, caractérisée en ce que les éléments ponctuels ont la forme d'un disque circulaire ou d'un disque elliptique.

6. Pièce selon l'une quelconque des revendications 1 à 5, caractérisée en ce que le nombre des éléments ponctuels est tel que la somme des aires de surface des éléments ponctuels représente jusqu'à 60 % environ de la surface totale du décor.

7. Pièce selon l'une quelconque des revendications 1 à 6, caractérisée en ce que le décor en métal noble est formé d'une couche, fixée par cuisson, qui contient de l'or, du platine ou du palladium.

8. Pièce selon la revendication 7, caractérisée en ce que l'épaisseur de couche d'un élément ponctuel est comprise entre 0,0001 et 0,1 mm.

9. Pièce selon la revendication 8, caractérisée en ce que l'épaisseur de couche de l'élément ponctuel est comprise entre 0,0001 et 0,001 mm.

Fig. 1

0,6 mm

0,2 mm

Fig. 2

Fig. 3   A   B   C   D

1